(19) Europäisches Patentamt
European Patent Office
Office européen des brevets

(11) **EP 3 660 213 A1**

(12) **EUROPEAN PATENT APPLICATION**

(43) Date of publication:
**03.06.2020 Bulletin 2020/23**

(51) Int Cl.:
***D21H 19/00*** *(2006.01)*

(21) Application number: **19211784.4**

(22) Date of filing: **27.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2018 JP 2018221157**
**27.11.2018 JP 2018221158**
**25.02.2019 JP 2019031638**

(71) Applicant: **Seiko Epson Corporation**
**Tokyo 160-8801 (JP)**

(72) Inventors:
• **AOYAMA, Tetsuya**
**Suwa-shi, Nagano 392-8502 (JP)**
• **KATO, Shinichi**
**Suwa-shi, Nagano 392-8502 (JP)**
• **WAKABAYASHI, Shigemi**
**Suwa-shi, Nagano 392-8502 (JP)**

(74) Representative: **Miller Sturt Kenyon**
**9 John Street**
**London WC1N 2ES (GB)**

(54) **FIBER BODY FORMING METHOD AND FIBER BODY FORMING APPARATUS**

(57) A fiber body forming method includes a step of applying a liquid to a web containing fibers, the liquid contains resin particles which bind the fibers, and the liquid has a surface tension of 50 mN/m or less at 20°C.

# FIG. 2

**Description**

The present application is based on, and claims priority from JP Application Serial Number 2018-221157, filed November 27, 2018, JP Application Serial Number 2019-031638, filed February 25, 2019, and JP Application Serial Number 2018-221158, filed November 27, 2018, the disclosures of which are hereby incorporated by reference herein in their entirety.

BACKGROUND

1. Technical Field

The present disclosure relates to a fiber body forming method and a fiber body forming apparatus.

2. Related Art

In order to achieve reduction in size and energy saving, there has been proposed a fiber body forming method by a dry system in which the amount of water to be used is decreased as much as possible. For example, JP-A-10-86247 has disclosed that after waste paper pulp fibers and thermoplastic resin fibers are mixed by a dry system to form a web, the thermoplastic resin fibers are melted by heating, and the waste paper pulp fibers and the thermoplastic resin fibers are bound together.

As described above, when fibers are bound together using a binder formed of a thermoplastic resin or the like, the binder is preferably infiltrated deeply in a web. When the binder is not infiltrated deeply in the web, a paper powder is liable to be generated, and for example, when a sheet is printed by an ink jet printer, the paper powder may clog a nozzle hole of the ink jet printer in some cases.

SUMMARY

A fiber body forming method according to an aspect of the present disclosure comprises: a step of applying a liquid to a web containing fibers, the liquid containing resin particles which bind the fibers, and the liquid has a surface tension of 50 mN/m or less at 20°C.

In the fiber body forming method according to the aspect, the resin particles may have an average particle diameter of 10 nm to 5 $\mu$m.

In the fiber body forming method according to the aspect, the resin particles may be a thermoplastic resin or a thermosetting resin.

In the fiber body forming method according to the aspect, the liquid may contain a penetrant.

In the fiber body forming method according to the aspect, the liquid may contain a moisturizer.

In the fiber body forming method according to the aspect, in the step of applying a liquid, the web may have a bulk density of 0.09 g/cm$^3$ or more.

In the fiber body forming method according to the aspect, in the step of applying a liquid, the web may have a bulk density of 0.80 g/cm$^3$ or less.

The fiber body forming method according to the aspect may further comprise a step of pressurizing the web to which the liquid is applied.

The fiber body forming method according to the aspect may further comprise a step of heating the web to which the liquid is applied.

In the fiber body forming method according to the aspect, in the step of applying a liquid, the liquid may be applied by an ink jet method.

A fiber body forming apparatus according to another aspect of the present disclosure comprises: a liquid application device which applies a liquid to a web containing fibers, the liquid containing resin particles which bind the fibers, and the liquid has a surface tension of 50 mN/m or less at 20°C.

BRIEF DESCRIPTION OF THE DRAWINGS

FIG. 1 is a schematic view showing a fiber body forming apparatus according to a first embodiment.
FIG. 2 is a schematic view showing liquid application devices of the fiber body forming apparatus according to the first embodiment.
FIG. 3 is a schematic view showing a fiber body forming method according to the first embodiment.

FIG. 4 is a schematic view showing a fiber body forming apparatus according to a first modified example of the first embodiment.

FIG. 5 is a schematic view showing a fiber body forming apparatus according to a second modified example of the first embodiment.

FIG. 6 is a schematic view showing a fiber body forming apparatus according to a third modified example of the first embodiment.

FIG. 7 is a schematic view showing a fiber body forming apparatus according to the third modified example of the first embodiment.

FIG. 8 is a schematic view showing a fiber body forming apparatus according to a second embodiment.

FIG. 9 is a schematic view showing a fiber body forming method according to the second embodiment.

FIG. 10 is a schematic view showing a fiber body forming apparatus according to a modified example of the second embodiment.

FIG. 11 is a table showing compositions of liquids L1 to L5.

FIG. 12 is a table showing evaluation results of a continuous printing property and a liquid stability of each of Examples 1 to 14 and Comparative Example 1.

DESCRIPTION OF EXEMPLARY EMBODIMENTS

Hereinafter, preferable embodiments of the present disclosure will be described in detail with reference to the attached drawings. In addition, the following embodiments do not unreasonably limit the contents of the present disclosure described in the claims. In addition, all the elements described below are not always required to be essential constituent elements of the present disclosure.

1. First Embodiment

1.1. Fiber Body Forming Apparatus

1.1.1. Structure

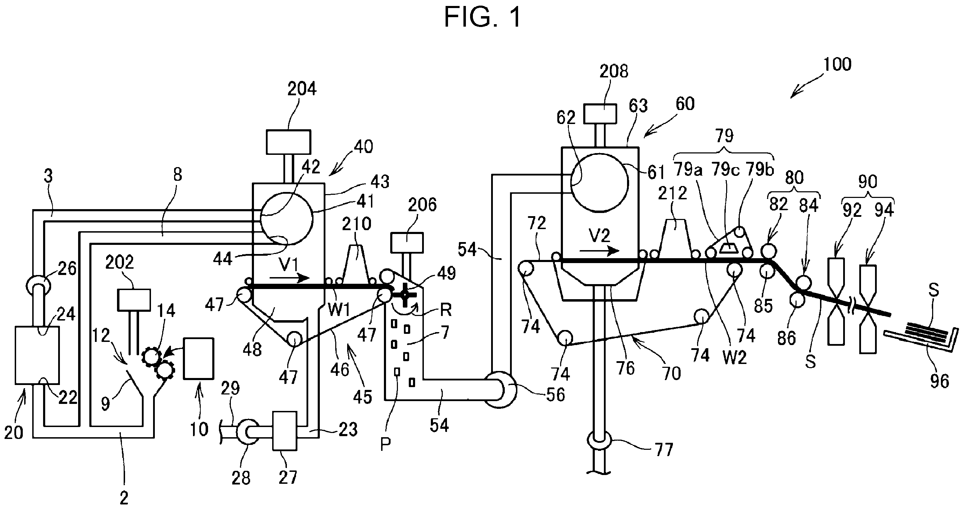

First, a fiber body forming apparatus according to a first embodiment will be described with reference to the drawing. FIG. 1 is a schematic view showing a fiber body forming apparatus 100 according to the first embodiment.

The fiber body forming apparatus 100 is, for example, a preferable apparatus which manufactures new paper by defibrating used waste paper as a raw material into fibers by a dry method, followed by pressure application, heating, and cutting. By the fiber body forming apparatus 100, since paper is formed while the density, the thickness, and the shape thereof are controlled, in accordance with the application, such as office paper having an A4 or an A3 size or paper for name cards, paper having various thicknesses and sizes can be manufactured.

**The** fiber body forming apparatus 100 includes, for example, a supply portion 10, a coarsely pulverizing portion 12, a defibrating portion 20, a sorting portion 40, a first web forming portion 45, a rotation body 49, a deposition portion 60, a second web forming portion 70, a transport portion 79, a sheet forming portion 80, and a cutting portion 90.

In order to humidify the raw material, a space in which the raw material is transferred, and the like, the fiber body forming apparatus 100 further includes humidifying portions 202, 204, 206, 208, 210, and 212.

The humidifying portions 202, 204, 206, and 208 are each formed, for example, of a vaporization type or a hot-wind vaporization type humidifier. That is, the humidifying portions 202, 204, 206, and 208 each have a filter (not shown) to be infiltrated with water and each supply humidified air having an increased humidity by allowing air to pass through the filter. The humidifying portions 202, 204, 206, and 208 each may also include a heater (not shown) which effectively increases the humidity of the humidified air.

The humidifying portions 210 and 212 are each formed, for example, of an ultrasonic type humidifier. That is, the humidifying portions 210 and 212 each include a vibration portion (not shown) which atomizes water and each supply mist generated by the vibration portion.

The supply portion 10 supplies the raw material to the coarsely pulverizing portion 12. The raw material to be supplied to the coarsely pulverizing portion 12 may be any material as long as containing fibers, and for example, there may be mentioned paper, pulp, a pulp sheet, a non-woven cloth, a cloth, or a woven fabric. In this embodiment, the structure of the fiber body forming apparatus 100 in which waster paper is used as the raw material will be described by way of example. The supply portion 10 includes, for example, a stacker in which waste paper is stacked and stored and an automatic charge device feeding the waste paper from the stacker to the coarsely pulverizing portion 12. In addition, a plurality of the waste paper is not always required to be aligned and stacked to each other, and waste paper having various sizes and waste paper having various shapes may be irregularly supplied to the stacker.

The coarsely pulverizing portion 12 cuts the raw material supplied by the supply portion 10 using coarsely pulverizing blades 14 into coarsely pulverized pieces. The coarsely pulverizing blade 14 cuts the raw material in a gas such as the air. The coarsely pulverizing portion 12 includes, for example, a pair of the coarsely pulverizing blades 14 which sandwich and cut the raw material and a drive portion which rotates the coarsely pulverizing blades 14 and can be formed to have a structure similar to that of a so-called shredder. The shape and the size of the coarsely pulverized pieces are arbitrary and may be appropriately determined so as to be suitable to a defibrating treatment in the defibrating portion 20. The coarsely pulverizing portion 12 cuts the raw material into pieces having a size of, for example, one centimeter square to several centimeters square or pieces smaller than that described above.

The coarsely pulverizing portion 12 includes a shoot 9 receiving the coarsely pulverized pieces which fall down after being cut by the coarsely pulverizing blades 14. The shoot 9 has, for example, a tapered shape in which the width thereof is gradually decreased in a direction along which the coarsely pulverized pieces flow down. Hence, the shoot 9 is able to receive many coarsely pulverized pieces. A tube 2 which communicates with the defibrating portion 20 is coupled to the shoot 9 to form a transport path through which the coarsely pulverized pieces are transported to the defibrating portion 20. The coarsely pulverized pieces are collected by the shoot 9 and are transported to the defibrating portion 20 through the tube 2. The coarsely pulverized pieces are transported by an air stream generated by, for example, a blower (not shown) toward the defibrating portion 20 through the tube 2.

To the shoot 9 of the coarsely pulverizing portion 12 or the vicinity of the shoot 9, humidified air is supplied by the humidifying portion 202. Accordingly, the coarsely pulverized pieces cut by the coarsely pulverizing blades 14 are suppressed from being adhered to inner surfaces of the shoot 9 and the tube 2 caused by static electricity. In addition, since the coarsely pulverized pieces cut by the coarsely pulverizing blades 14 are transported to the defibrating portion 20 together with humidified air having a high humidity, an effect of suppressing the adhesion of a defibrated material in the defibrating portion 20 can also be anticipated. In addition, the humidifying portion 202 may also be configured so as to supply humidified air to the coarsely pulverizing blades 14 and to remove electricity of the raw material supplied by the supply portion 10. In addition, besides the humidifying portion 202, removal of electricity may also be performed using an ionizer.

The defibrating portion 20 defibrates the coarsely pulverized pieces cut in the coarsely pulverizing portion 12. In more particular, in the defibrating portion 20, the raw material cut by the coarsely pulverizing portion 12 is processed by the defibrating treatment to produce a defibrated material. In this case, the "defibrate" indicates that the raw material formed of fibers bound to each other is disentangled into separately independent fibers. The defibrating portion 20 also has a function to separate substances, such as resin particles, an ink, a toner, and a blurring inhibitor, each of which is adhered to the raw material, from the fibers.

A material passing through the defibrating portion 20 is called a "defibrated material". In the "defibrated material", besides the fibers thus disentangled, resin particles, that is, resin particles functioning to bind fibers together; coloring materials, such as an ink and a toner; and additives, such as a blurring inhibitor and a paper reinforcing agent, which are separated from the fibers when the fibers are disentangled, may also be contained in some cases. The defibrated material thus disentangled has a string shape or a ribbon shape. The defibrated material thus disentangled may be present in a state, that is, in an independent state, so as not to be entangled with other disentangled fibers or may be present in a state, that is, in a state in which so-called "damas" are formed, so as to be entangled together to form lumps.

**The** defibrating portion 20 performs dry defibration. In this case, a treatment, such as defibration, which is performed not in a liquid but in a gas, such as the air, is called a dry type. The defibrating portion 20 is formed, for example, to use an impellor mill. In particular, although not shown in the drawing, the defibrating portion 20 includes a high-speed rotating rotor and a liner disposed around the outer circumference of the rotor. The coarsely pulverized pieces cut by the coarsely pulverizing portion 12 are sandwiched between the rotor and the liner of the defibrating portion 20 and are then defibrated thereby. The defibrating portion 20 generates an air stream by the rotation of the rotor. By this air stream, the defibrating portion 20 sucks the coarsely pulverized pieces functioning as the raw material through the tube 2, and the defibrated material can be transported to a discharge port 24. The defibrated material is fed to a tube 3 from the discharge port 24 and then transported to the sorting portion 40 through the tube 3.

As described above, the defibrated material produced in the defibrating portion 20 is transported to the sorting portion 40 from the defibrating portion 20 by the air stream generated thereby. Furthermore, in the example shown in the drawing, the fiber body forming apparatus 100 includes a defibrating blower 26 functioning as an air stream generator, and by an air stream generated by the defibrating blower 26, the defibrated material is transported to the sorting portion 40. The defibrating blower 26 is provided for the tube 3, and air is sucked together with the defibrated material from the defibrating portion 20 and then sent to the sorting portion 40.

The sorting portion 40 includes an inlet port 42 into which the defibrated material defibrated in the defibrating portion 20 flows together with the air stream through the tube 3. The sorting portion 40 sorts the defibrated material introduced into the inlet port 42 by the length of the fibers. In particular, the sorting portion 40 sorts the defibrated material defibrated in the defibrating portion 20 into a defibrated material having a predetermined size or less as a first sorted material and a defibrated material larger than the first sorted material as a second sorted material. The first sorted material includes fibers, particles, and the like, and the second sorted material includes, for example, large fibers, non-defibrated pieces, coarsely pulverizing pieces which are not sufficiently defibrated, and damas which are formed since defibrated fibers are aggregated or entangled with each other.

The sorting portion 40 includes, for example, a drum portion 41 and a housing portion 43 receiving the drum portion 41.

The drum portion 41 is a cylindrical sieve which is rotatably driven by a motor. The drum portion 41 has a net and functions as a sieve. By the meshes of this net, the drum 41 sorts the first sorted material smaller than the sieve opening of the net and the second sorted material larger than the sieve opening of the net. As the net of the drum portion 41, for example, there may be used a metal net, an expanded metal formed by expanding a metal plate provided with cut lines, or a punched metal in which holes are formed in a metal plate by a press machine or the like.

The defibrated material introduced into the inlet port 42 is fed together with the air stream to the inside of the drum portion 41, and by the rotation of the drum portion 41, the first sorted material is allowed to fall down through the meshes of the net of the drum portion 41. The second sorted material which is not allowed to pass through the meshes of the net of the drum portion 41 is guided to a discharge port 44 by the air stream flowing into the drum portion 41 from the inlet port 42 and is then fed to a tube 8.

The tube 8 communicates between the inside of the drum portion 41 and the tube 2. The second sorted material which flows through the tube 8 flows together with the coarsely pulverized pieces cut by the coarsely pulverizing portion 12 in the tube 2 and is then guided to an inlet port 22 of the defibrating portion 20. Accordingly, the second sorted material is returned to the defibrating portion 20 and is then subjected to the defibrating treatment.

In addition, the first sorted material sorted by the drum portion 41 is dispersed in air through the meshes of the net of the drum portion 41 and is then allowed to fall down to a mesh belt 46 of the first web forming portion 45 located under the drum portion 41.

The first web forming portion 45 includes the mesh belt 46, rollers 47, and a suction portion 48. The mesh belt 46 is an endless belt, is suspended by the three rollers 47, and by the movement of the rollers 47, is transported in a direction shown by an arrow in the drawing. The surface of the mesh belt 46 is formed of a net in which openings having a predetermined size are arranged. Of the first sorted material which is allowed to fall down from the sorting portion 40, fine particles passing through the meshes of the net fall down to a lower side of the mesh belt 46, and fibers having a size which are not allowed to pass through the meshes of the net are deposited on the mesh belt 46 and are transported therewith in the arrow direction. The fine particles which fall down through the mesh belt 46 include particles having a relatively small size and/or a low density of the defibrated material, that is, include resin particles, coloring materials, additives, and the like, which are not necessary for binding between the fibers, and the fine particles are unnecessary materials which will not be used for manufacturing of a sheet S by the fiber body forming apparatus 100.

The mesh belt 46 is transferred at a predetermined velocity V1 during a normal operation for manufacturing of the sheet S. In the case described above, "during the normal operation" indicates during the operation other than that performing a start control and a stop control of the fiber body forming apparatus 100 and, in more particular, indicates during manufacturing of a sheet S having a preferable quality by the fiber body forming apparatus 100.

Accordingly, the defibrated material processed by the defibrating treatment in the defibrating portion 20 is sorted into the first sorted material and the second sorted material in the sorting portion 40, and the second sorted material is returned to the defibrating portion 20. In addition, from the first sorted material, the unnecessary materials are removed by the first web forming portion 45. The residues obtained after the unnecessary materials are removed from the first sorted material are a material suitable for manufacturing of the sheet S, and this material is deposited on the mesh belt 46 to form a first web W1.

The suction portion 48 sucks air under the mesh belt 46. The suction portion 48 is coupled to a dust collection portion 27 through a tube 23. The dust collection portion 27 is a filter-type or a cyclone-type dust collection device and separates fine particles from the air stream. A collection blower 28 is provided at a downstream side of the dust collection portion 27 and functions as a dust suction portion which sucks air from the dust collection portion 27. In addition, air discharged from the collection blower 28 is discharged outside of the fiber body forming apparatus 100 through a tube 29.

According to the fiber body forming apparatus 100, by the collection blower 28, air is sucked from the suction portion 48 through the dust collection portion 27. In the suction portion 48, fine particles passing through the meshes of the net of the mesh belt 46 are sucked together with air and are then fed to the dust collection portion 27 through the tube 23. In the dust collection portion 27, the fine particles passing through the mesh belt 46 are separated from the air stream and are then accumulated.

Hence, fibers obtained after the unnecessary materials are removed from the first sorted material are deposited on the mesh belt 46, and hence, the first web W1 is formed. Since the suction is performed by the collection blower 28, the formation of the first web W1 on the mesh belt 46 is promoted, and in addition, the unnecessary materials can be rapidly removed.

To a space including the drum portion 41, humidified air is supplied by the humidifying portion 204. By this humidified air, the first sorted material is humidified in the sorting portion 40. Accordingly, the adhesion of the first sorted material to the mesh belt 46 caused by static electricity is suppressed, so that the first sorted material is likely to be peeled away from the mesh belt 46. Furthermore, the adhesion of the first sorted material to the rotation body 49 and the inner wall of the housing portion 43 caused by static electricity can be suppressed. In addition, by the suction portion 48, the unnecessary materials can be efficiently sucked.

In addition, in the fiber body forming apparatus 100, the structure in which the first sorted material and the second sorted material are sorted and separated is not limited to the sorting portion 40 including the drum portion 41. For example, the structure in which the defibrated material obtained by the defibrating treatment in the defibrating portion 20 is classified by a classifier may also be used. As the classifier, for example, a cyclone classifier, an elbow-jet classifier, or an eddy classifier may be used. When those classifiers are used, the first sorted material and the second sorted material can be sorted and separated. Furthermore, by the classifiers described above, the structure in which materials having a relatively small size and/or a low density, that is, the unnecessary materials, such as resin particles, coloring materials, and additives, which are not necessary for binding between the fibers, in the defibrated material are separated and removed therefrom can be realized. For example, the structure in which fine particles contained in the first sorted material are removed therefrom by a classifier may also be formed. In this case, the structure in which the second sorted material is returned, for example, to the defibrating portion 20, the unnecessary materials are collected by the dust collection portion 27, and the first sorted material other than the unnecessary materials is fed to a tube 54 may be formed.

In a transport path of the mesh belt 46, at a downstream side of the sorting portion 40, air containing mist is supplied by the humidifying portion 210. The mist which is fine particles of water generated by the humidifying portion 210 falls down to the first web W1 and supplies moisture thereto. Accordingly, the moisture amount contained in the first web W1 is adjusted, and hence, for example, the adsorption of the fibers to the mesh belt 46 caused by static electricity can be suppressed.

The fiber body forming apparatus 100 includes the rotation body 49 which divides the first web W1 deposited on the mesh belt 46. The first web W1 is peeled away from the mesh belt 46 at a position at which the mesh belt 46 is folded by the roller 47 and is then divided by the rotation body 49.

The first web W1 is a soft material having a web shape formed by deposition of the fibers, and the rotation body 49 disentangles the fibers of the first web W1.

Although the structure of the rotation body 49 is arbitrarily formed, in the example shown in the drawing, the rotation body 49 has a rotating blade shape having rotatable plate-shaped blades. The rotation body 49 is disposed at a position at which the first web W1 peeled away from the mesh belt 46 is brought into contact with the blade. By the rotation of the rotation body 49, such as the rotation in a direction indicated by an arrow R in the drawing, the first web W1 peeled away from and transported by the mesh belt 46 collides with the blade and is divided thereby, so that small parts P are produced.

In addition, the rotation body 49 is preferably placed at a position at which the blade of the rotation body 49 does not collide with the mesh belt 46. For example, the distance between a front end of the blade of the rotation body 49 and the mesh belt 46 can be set to be 0.05 to 0.5 mm, and in this case, without causing damage on the mesh belt 46, the first web W1 can be efficiently divided by the rotation body 49.

The small parts P divided by the rotation body 49 fall down in a tube 7 and are then transported to the tube 54 by an air stream flowing inside the tube 7.

In addition, to a space including the rotation body 49, humidified air is supplied by the humidifying portion 206. Accordingly, a phenomenon in which the fibers are adsorbed by static electricity to the inside of the tube 7 and the blades of the rotation body 49 can be suppressed.

By the air stream generated by the blower 56, the small parts P falling down in the tube 7 are sucked in the tube 54 and are allowed to pass through the inside of the blower 56. By the air stream generated by the blower 56 and the function of a rotating portion, such as a blade, of the blower 56, the small parts P are transported to the deposition portion 60 through the tube 54.

The deposition portion 60 deposits the defibrated material defibrated in the defibrating portion 20. In more particular, the deposition portion 60 introduces the small parts P through an inlet port 62 and disentangles the defibrated material thus entangled, so that the defibrated material is allowed to fall down while being dispersed in air. Accordingly, the deposition portion 60 can uniformly deposit the defibrated material in the second web forming portion 70.

The deposition portion 60 includes a drum portion 61 and a housing portion 63 receiving the drum portion 61. The drum portion 61 is a cylindrical sieve rotatably driven by a motor. The drum portion 61 has a net and functions as a sieve. By the meshes of this net, the drum portion 61 allows fibers and particles, each of which is smaller than the mesh opening of this net, to pass through and fall down from the drum portion 61. For example, the structure of the drum portion 61 is the same as that of the drum portion 41.

In addition, the "sieve" of the drum portion 61 may not have a function to sort a specific object. That is, the "sieve" to be used as the drum portion 61 indicates a member provided with a net, and the drum portion 61 may allows all of the defibrated material introduced thereinto to fall down.

Under the drum portion 61, the second web forming portion 70 is disposed. The second web forming portion 70 deposits a material passing through the deposition portion 60 to form a second web W2. The second web forming portion 70 includes, for example, a mesh belt 72, rollers 74, and a suction mechanism 76.

The mesh belt 72 is an endless belt, is suspended by the rollers 74, and by the movement of the rollers 74, is transported in a direction shown by an arrow in the drawing. The mesh belt 72 is formed, for example, of a metal, a resin, a cloth, or a non-woven cloth. The surface of the mesh belt 72 is formed of a net in which openings having a predetermined size are arranged. Of the fibers which are allowed to fall down from the drum portion 61, fibers having a size which are allowed to pass through the meshes of the net fall down to a lower side of the mesh belt 72, and fibers having a size which are not allowed to fall down through the meshes of the net are deposited on the mesh belt 72 and are transported therewith in the arrow direction. The mesh belt 72 is transferred at a predetermined velocity V2 during a normal operation for manufacturing of the sheet S. The "during the normal operation" indicates the same as described above.

The meshes of the net of the mesh belt 72 are fine and may be set so that most of the fibers falling down from the drum portion 61 are not allowed to pass therethrough.

The suction mechanism 76 is provided at a lower side of the mesh belt 72. The suction mechanism 76 includes a suction blower 77, and by a suction force of the suction blower 77, an air stream toward a lower side can be generated in the suction mechanism 76.

By the suction mechanism 76, a defibrated material dispersed in air by the deposition portion 60 is sucked on the mesh belt 72. Accordingly, the formation of the second web W2 on the mesh belt 72 is promoted, and hence, a discharge rate from the deposition portion 60 can be increased. Furthermore, by the suction mechanism 76, a downflow can be formed in a falling path of the defibrated material, and hence, the defibrated material can be prevented from being entangled with each other during the falling.

The suction blower 77 may discharge air sucked from the suction mechanism 76 outside of the fiber body forming apparatus 100 through a collection filter (not shown). Alternatively, air sucked by the suction blower 77 may be fed to the dust collection portion 27 so that unnecessary materials contained in the air sucked by the suction mechanism 76 may be collected.

To a space including the drum portion 61, humidified air is supplied by the humidifying portion 208. By this humidified air, the inside of the deposition portion 60 can be humidified, and the adhesion of fibers to the housing portion 63 caused by static electricity is suppressed, so that the fibers are allowed to rapidly fall down on the mesh belt 72, and the second web W2 can be formed to have a preferable shape.

As described above, through the deposition portion 60 and the second web forming portion 70, the second web W2 can be formed so as to be softly expanded with a large amount of air incorporated therein. The second web W2 deposited on the mesh belt 72 is transported to the sheet forming portion 80.

In a transport path of the mesh belt 72, at a downstream side of the deposition portion 60, by the humidifying portion 212, air containing mist is supplied. Accordingly, the mist generated by the humidifying portion 212 is supplied to the second web W2, so that the content of moisture contained in the second web W2 is adjusted. Accordingly, for example, the adsorption of fibers to the mesh belt 72 caused by static electricity can be suppressed.

The fiber body forming apparatus 100 includes the transport portion 79 which transports the second web W2 on the mesh belt 72 to the sheet forming portion 80. The transport portion 79 includes, for example, a mesh belt 79a, rollers 79b, and a suction mechanism 79c.

The suction mechanism 79c includes a blower not shown, and by a suction force of the blower, an upward air stream is generated to the mesh belt 79a. This air stream sucks the second web W2, and the second web W2 is separated from the mesh belt 72 and then adsorbed to the mesh belt 79a. The mesh belt 79a is transferred by the rotations of the rollers 79b, so that the second web W2 is transported to the sheet forming portion 80. The transfer rate of the mesh belt 72 is the same, for example, as the transfer rate of the mesh belt 79a.

As described above, the transport portion 79 peels away the second web W2 formed on the mesh belt 72 therefrom and then transports the second web W2 thus peeled away.

The sheet forming portion 80 forms the sheet S from a deposit deposited in the deposition portion 60. In more particular, the sheet forming portion 80 forms the sheet S by heating and pressurizing the second web W2 which is deposited on the mesh belt 72 and is then transported by the transport portion 79.

**The** sheet forming portion 80 includes a pressure application portion 82 which pressurizes the second web W2 and a heating portion 84 which heats the second web W2 pressurized by the pressure application portion 82.

The pressure application portion 82 is formed of a pair of calendar rollers 85 which sandwich the second web W2 at a predetermined nip pressure for pressure application. Since the second web W2 is pressurized, the thickness thereof is decreased, and hence, the density of the second web W2 is increased. One of the pair of calendar rollers 85 is a drive roller driven by a motor not shown in the drawing, and the other roller is a driven roller. The calendar rollers 85 are rotated by a driving force of the motor, and the second web W2, the density of which is increased by the pressure application, is transported toward the heating portion 84.

The heating portion 84 is formed, for example, using heating rollers, a heat press forming machine, a hot plate, a hot-wind blower, an infrared heater, or a flash fixing device. In the example shown in the drawing, the heating portion 84 includes a pair of heating rollers 86. The heating rollers 86 are heated to a predetermined temperature by a heater disposed inside or outside. The heating rollers 86 sandwich the second web W2 pressurized by the calendar rollers 85 for heating, so that the sheet S is formed.

One of the pair of heating rollers 86 is a drive roller driven by a motor not shown in the drawing, and the other roller is a driven roller. The heating rollers 86 are rotated by a driving force of the motor, so that the sheet S thus heated is transported toward the cutting portion 90.

As described above, the second web W2 formed in the deposition portion 60 is pressurized and heated in the sheet forming portion 80, so that the sheet S is formed.

In addition, the number of the calendar rollers 85 of the pressure application portion 82 and the number of the heating rollers 86 of the heating portion 84 are not particularly limited.

The cutting portion 90 cuts the sheet S formed in the sheet forming portion 80. In the example shown in the drawing, the cutting portion 90 includes a first cutting portion 92 which cuts the sheet S in a direction intersecting a transport direction of the sheet S and a second cutting portion 94 which cuts the sheet S in a direction parallel to the transport direction. The second cutting portion 94 cuts, for example, the sheet S which passes through the first cutting portion 92.

As described above, a single sheet S having a predetermined size is formed. The single sheet S thus cut is discharged to a discharge portion 96. The discharge portion 96 includes a tray or a stacker on each of which sheets S each having a predetermined size are placed.

In addition, although not shown in the drawing, the humidifying portions 202, 204, 206, and 208 may be formed from one vaporization type humidifier. In this case, the structure may be formed so that humidified air generated by one humidifier is branched and supplied to the coarsely pulverizing portion 12, the housing portion 43, the tube 7, and the housing portion 63. When a duct which supplies humidified air is branched and then installed, the structure described above can be easily realized. In addition, the humidifying portions 202, 204, 206, and 208 may also be formed from two or three vaporization type humidifiers.

In addition, the humidifying portions 210 and 212 may be formed from one ultrasonic type humidifier or may be formed from two ultrasonic type humidifiers. For example, air containing mist generated by one humidifier may be configured to be branched and supplied to the humidifying portions 210 and 212.

1.1.2. Liquid Application Device

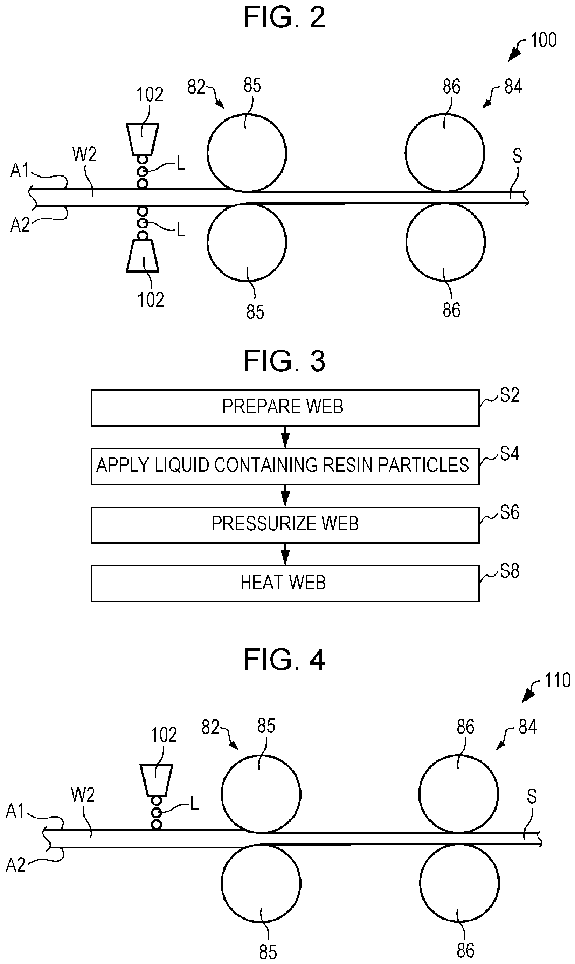

Next, a liquid application device of the fiber body forming apparatus 100 will be described with reference to the drawing. Fig. 2 is a schematic view showing liquid application devices 102 of the fiber body forming apparatus 100. As shown in FIG. 2, the fiber body forming apparatus 100 includes the liquid application devices 102.

In addition, for the convenience of illustration, the liquid application devices 102 are omitted in FIG. 1. In addition, in FIG. 1, although an example in which the second web W2 is transported in an inclined lower direction from the pressure application portion 82 is shown, in FIG. 2, an example in which the second web W2 is transported in a horizontal direction from the pressure application portion 82 is shown.

The liquid application devices 102 apply a liquid L containing resin particles which bind fibers to the second web W2 containing fibers. Hereinafter, the "second web W2" is also simply called "web W2" in some cases.

The liquid application device 102 is an ink jet head and applies the liquid L by an ink jet method. The liquid application device 102 may be a line head type ink jet head having a width larger than the width of the web W2. Accordingly, the productivity can be improved. In addition, the liquid application device 102 may be not a line head type and may be a type in which the head itself moves.

For example, the two liquid application devices 102 are provided. In the example shown in the drawing, between the two liquid application devices 102, the web W2 is located. One of the two liquid application devices 102 applies the liquid L to one surface A1 of the web W2, and the other liquid application device 102 applies the liquid L to the other surface A2 of the web W2.

In the example shown in the drawing, the two liquid application devices 102 are provided so as to be overlapped with each other in a thickness direction of the web W2. The two liquid application devices 102 may simultaneously apply the liquid L to the web W2.

The pressure application portion 82 pressurizes the web W2 to which the liquid L is applied by the liquid application devices 102. The pressure to be applied to the web W2 by the pressure application portion 82 is, for example, 30 to 1,000 kgf/cm$^2$ and preferably 200 to 700 kgf/cm$^2$.

The heating portion 84 heats the web W2 to which the liquid L is applied by the liquid application devices 102. In the example shown in the drawing, the heating portion 84 heats the web W2 pressurized by the pressure application portion 82. The web W2 heated by the heating portion 84 is formed into the sheet S. The temperature of the heating portion 84 is, for example, 70°C to 220°C and preferably 100°C to 180°C.

The liquid L contains the resin particles which bind the fibers of the web W2. The liquid L is an emulsion in which the resin particles are dispersed. The resin particles function as a binder which binds the fibers together. In the web W2 to which the liquid L is not yet applied, for example, the resin particles which bind the fibers together are not contained. The resin particles are a resin in the form of particles, and the shape thereof is, for example, an approximately sphere and preferably a sphere.

The resin particles contained in the liquid L are, for example, a thermoplastic resin or a thermosetting resin. As the thermoplastic resin, for example, there may be mentioned a styrene-butadiene copolymer, an acrylonitrile-butadiene copolymer, an acrylic acid ester copolymer, a styrene-acrylic acid copolymer, a polyurethane, a polyester, a poly(vinyl acetate), an ethylene-vinyl acetate copolymer, a polyacrylamide, a poly(vinyl alcohol), or a poly(vinyl pyrrolidone). As the thermosetting resin, for example, there may be mentioned an epoxy resin, a phenol resin, an urea resin, a melamine resin, an unsaturated polyester resin, an alkyd resin, a diallyl phthalate resin, a vinyl ester resin, or a thermosetting polyimide. In the liquid L, those resins may be contained alone, or at least two thereof may be contained in combination.

The glass transition temperature of each of the thermoplastic resin and the thermosetting resin contained in the liquid L is, for example, -50°C to 130°C and preferably - 30°C to 100°C. When the glass transition temperature of the resin particles is in the range described above, binding between the fibers can be improved, and a paper strength can be increased.

The content of the resin particles in the liquid L is, for example, 0.1 to 30.0 percent by mass and preferably 0.1 to 20.0 percent by mass. When the content described above is 0.1 to 30.0 percent by mass, the viscosity of the liquid L can be decreased so that the liquid L can be sufficiently ejected from the liquid application device 102.

The average particle diameter of the resin particles is, for example, 5 nm to 8 μm, preferably 9 nm to 6 μm, more preferably 10 nm to 5 μm, and even more preferably 10 nm to 300 nm. When the average particle diameter is in the range as described above, the resin particles can be sufficiently dispersed on the surfaces of the fibers, and the number of fiber adhesion points can be increased, so that the paper strength of the sheet S can be increased.

In addition, the "average particle diameter" indicates a 50%-cumulative particle diameter value which is obtained in such a way that after the liquid L is diluted with water, such as purified water, in this diluted state, the particle size distribution is measured, for example, by a particle size distribution meter "Microtrac UPA-150" manufactured by Nikkiso Co., Ltd.

When being heated by the heating portion 84, the fibers contained in the web W2 are bound together by the resin particles contained in the liquid L. In addition, although not shown in the drawing, besides the heating portion 84, for example, by hot wind, infrared rays, electromagnetic waves, heating rollers, or a heat press, the web W2 to which the liquid L is applied may be separately heated. Accordingly, melt binding and/or gluing of the resin particles contained in the liquid L can be promoted, and in addition, drying of water or the like can also be promoted.

The surface tension of the liquid L is at 20°C, 50 mN/m or less, preferably 20 to 50 mN/m, and more preferably 45 to 50 mN/m. Since the surface tension of the liquid L is set to 50 mN/m or less at 20°C, the liquid L can be infiltrated deeply in the web W2, and the generation of the paper powder can be suppressed. In addition, since the surface tension of the liquid L is se to 20 mN/m or more at 20°C, an ink repellent property of a nozzle plate of the ink jet head can be suppressed from being degraded, and hence, occurrence of ejection defects can be prevented. In addition, the surface tension can be measured by a surface tension meter.

The viscosity of the liquid L is preferably 8.0 mPa·s or less at 20°C. When the viscosity of the liquid L is more than 8.0 mPa·s, the viscosity is excessively high, and hence, it may become difficult to eject the liquid L from the liquid application device 102 in some cases.

The liquid L may contain a penetrant. Accordingly, the infiltration of the liquid L in the thickness direction of the web W2 is improved. Hence, fiber binding in the sheet S can be improved, interlayer peeling of the sheet S can be suppressed, and the tensile strength thereof can be increased. As the penetrant contained in the liquid L, for example, there may be mentioned a glycol ether, such as triethylene glycol monobutyl ether, triethylene glycol dimethyl ether, triethylene glycol diethyl ether, triethylene glycol dibutyl ether, or triethylene glycol methyl butyl ether; a silicone-based surfactant, an acetylene glycol-based surfactant, an acetylene alcohol-based surfactant, or a fluorine-based surfactant. The liquid L may contain at least one of the penetrants mentioned above.

The content of the penetrant in the liquid L is, for example, 0.1 to 30.0 percent by mass, preferably 0.1 to 20.0 percent by mass, and more preferably 1.0 to 10.0 percent by mass. When the content described above is 0.1 to 30.0 percent by mass, the infiltration of the liquid L into the web W2 is promoted, and hence, the paper strength of the sheet S can be increased.

The liquid L may contain a moisturizer. Accordingly, when the liquid L is ejected, clogging of a nozzle hole of the liquid application device 102 is not likely to occur. As the moisturizer contained in the liquid L, for example, there may be mentioned diethylene glycol, triethylene glycol, propylene glycol, dipropylene glycol, 1,3-propanediol, 1,3-butylene glycol, 1,4-butanediol, 1,5-pentanediol, 1,6-hexanediol, 2-ethyl-2-methyl-1,3-propanediol, 2-methyl-2-propyl-1,3-propanediol, 2-methyl-1,3-propanediol, 2,2-dimethyl-1,3-propanediol, 3-methyl-1,3-propanediol, 1,2-hexanediol, 2-ethyl-1,3-hexanediol, 3-methyl-1,5-penetandiol, 2-methylpenetane-2,4-diol, trimethylolpropane, or glycerin. The liquid L may contain at least one of the moisturizers mentioned above.

The content of the moisturizer in the liquid L is, for example, 1.0 to 30.0 percent by mass, preferably 3.0 to 20.0 percent by mass, and more preferably 5.0 to 16 percent by mass. When the content described above is 1.0 to 30.0 percent by mass, the clogging of the nozzle hole of the liquid application device 102 can be sufficiently suppressed.

The liquid L may contain water. As the water, purified water or ultra purified water, such as ion-exchanged water, ultrafiltrated water, reverse osmosis water, or distilled water, may be mentioned. In addition, water sterilized by UV irradiation or addition of hydrogen peroxide is preferable since the generation of fungi and/or bacterial can be prevented, and long storage can be performed.

As other additives to be contained in the liquid L, for example, there may be mentioned an UV absorber, a light stabilizer, a quencher, an antioxidant, a water resistant agent, a fungicide, an antiseptic agent, a thickening agent, a flow modifier, a pH adjuster, a defoaming agent, an antifoam agent, a leveling agent, and/or a antistatic agent.

1.1.3. Features

The fiber body forming apparatus 100 has, for example, the following features.

The fiber body forming apparatus 100 includes the two liquid application devices 102 which apply the liquid L containing resin particles which bind fibers together to the web W2 containing fibers, and the surface tension of the liquid L is 50 mN/m or less at 20°C. Hence, in the fiber body forming apparatus 100, as described below in "3. Examples and Comparative Examples", compared to the case in which the surface tension is more than 50 mN/m at 20°C, the liquid L can be infiltrated deeply in the web W2, and the generation of the paper powder can be suppressed. Accordingly, when printing is performed on the sheet S by an ink jet printer, dot missing generated when the paper powder clogs the nozzle hole of the ink jet printer can be prevented. In particular, since the paper powder is liable to be generated when the sheet S is cut, the liquid L is preferably infiltrated deeply in the web W2.

Furthermore, in the fiber body forming apparatus 100, since the liquid L containing resin particles which bind fibers together is applied to the web W2, the surface area per unit mass of the resin particles is large, and a contact area between the fibers and the resin particles can be increased. Hence, a binding force of the fibers can be increased, and the generation of the paper powder can be suppressed. For example, when resin particles which bind the fibers together are supplied in the form of a powder to the web, the resin particles are aggregated, and as a result, the contact area between the fibers and the resin particles cannot be easily increased. In addition, since the liquid L can increase the binding force of the fibers, in accordance with the increase of the binding force, the amount of the resin particles can be decreased.

In the fiber body forming apparatus 100, the average particle diameter of the resin particles contained in the liquid L is preferably 10 nm to 5 $\mu$m. Hence, in the fiber body forming apparatus 100, as described below in "3. Examples and Comparative Examples", compared to the case in which the average particle diameter of the resin particles is out of the range described above, the liquid L can be infiltrated deeply in the web W2, and as a result, the generation of the paper powder can be suppressed. Furthermore, the stability in viscosity of the liquid L can also be improved.

In the fiber body forming apparatus 100, the resin particles contained in the liquid L are a thermoplastic resin or a thermosetting resin. Hence, in the fiber body forming apparatus 100, since the web W2 to which the liquid L is applied is heated, the fibers contained in the web W2 can be bound together.

In the fiber body forming apparatus 100, the liquid L contains the penetrant. Hence, in the fiber body forming apparatus 100, the infiltration of the liquid L can be improved.

In the fiber body forming apparatus 100, the liquid L contains the moisturizer. Hence, in the fiber body forming apparatus 100, the liquid L can be easily ejected from the liquid application device 102.

The fiber body forming apparatus 100 includes the pressure application portion 82 which pressurizes the web W2 to which the liquid L is applied. Hence, in the fiber body forming apparatus 100, by the pressure application portion 82, the bulk density of the web W2 can be increased.

The fiber body forming apparatus 100 includes the heating portion 84 which heats the web W2 to which the liquid L is applied. Hence, in the fiber body forming apparatus 100, since the web W2 to which the liquid L is applied is heated by the heating portion 84, the fibers contained in the web W2 can be bound together.

According to the fiber body forming apparatus 100, the liquid application device 102 is an ink jet head. Hence, in the fiber body forming apparatus 100, compared to the case in which the liquid application device is a roller, and the liquid is applied by the roller, the uniformity of the liquid L thus applied is superior, and the web W2 can be prevented from being damaged. For example, when the liquid is applied using a roller, the web may be adhered to the roller in some cases, and the uniformity of the liquid L thus applied may be degraded in some cases. In addition, since the web W2 may be damaged, and/or the roller may be contaminated in some cases, the roller is required to be cleaned in some cases. By the application using the ink jet head, the problems as described above can be avoided.

Furthermore, according to the fiber body forming apparatus 100, compared to the case in which the liquid application device is a spray, and the liquid is applied by the spray, the liquid L can be efficiently applied. In the case of spray application, even if the liquid is sprayed from the spray, the amount of the liquid which is not tightly adhered to or not infiltrated in the web is large, and hence, the amount of the liquid to be sprayed is required to be larger than that actually applied to the web, so that the efficiency is inferior. Furthermore, in the case of spray application, by the pressure of the spray, the web may be damaged in some cases. By the application using the ink jet head, the problems as described above can be avoided.

1.2. Fiber Body Forming Method

Next, a fiber body forming method according to the first embodiment will be described with reference to the drawing. FIG. 3 is a flowchart illustrating the fiber body forming method according to the first embodiment. The fiber body forming method according to the first embodiment forms fibers, for example, using the fiber body forming apparatus 100.

First, as described in "1. Fiber Body Forming Apparatus", by using the fiber body forming apparatus 100, the web W2 containing fibers is prepared (Step S2).

Subsequently, by the two liquid application devices 102, the liquid L containing resin particles which bind fibers is applied to the web W2 (Step S4). In this step, the liquid L is applied by an ink jet method.

Next, by the pressure application portion 82, the web W2 to which the liquid L is applied is pressurized (Step S6).

Subsequently, by the heating portion 84, the web W2 to which the liquid L is applied is heated (Step S8).

Besides the steps described above, the fiber body forming method according to the first embodiment may includes the steps described in "1. Fiber Body Forming Apparatus". 1.3. Modified Examples of Fiber Body Forming Apparatus

1.3.1. First Modified Example

Next, a fiber body forming apparatus according to a first modified example of the first embodiment will be described with reference to the drawing. FIG. 4 is a schematic view showing a fiber body forming apparatus 110 according to the first modified example of the first embodiment.

Hereinafter, in the fiber body forming apparatus 110 according to the first modified example of the first embodiment, points different from those of the above fiber body forming apparatus 100 according to the first embodiment will be described, and description of points thereof similar to each other will be omitted. The same as described above may also be applied to the following fiber body forming apparatus according to each of a second and a third modified example of the first embodiment.

According to the fiber body forming apparatus 100 described above, as shown in FIG. 2, the two liquid application devices 102 are provided, one of the liquid application devices 102 is provided at one surface A1 side of the web W2, and the other liquid application device 102 is provided at the other surface A2 side of the web W2.

On the other hand, according to the fiber body forming apparatus 110, as shown in FIG. 4, the liquid application device 102 is provided only at the one surface A1 side of the web W2. According to the fiber body forming apparatus 110, compared to the case in which the two liquid application devices 102 are provided, the number of components can be reduced. However, in order to reliably infiltrate the liquid L to the other surface A2 of the web W2, as is the fiber body forming apparatus 100 described above, the two liquid application devices 102 are preferably provided.

1.3.2. Second Modified Example

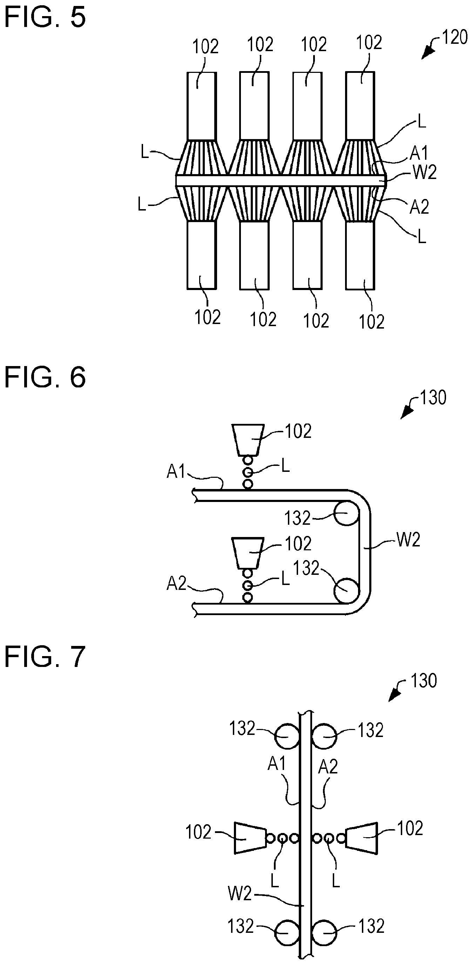

Next, a fiber body forming apparatus according to the second modified example of the first embodiment will be described with reference to the drawing. FIG. 5 is a schematic view showing a fiber body forming apparatus 120 according to the second modified example of the first embodiment. In addition, Fig. 5 is a view when viewed along a transport direction of the web W2.

In the fiber body forming apparatus 100 described above, the liquid application device 102 is the ink jet head.

On the other hand, in the fiber body forming apparatus 120, as shown in FIG. 5, the liquid application device 102 is a spray. Although the number of the liquid application devices 102 is not particularly limited, in the example shown in the drawing, four liquid application devices 102 are provided at the one surface A1 side of the web W2, and four liquid application devices 102 are provided at the other surface A2 side of the web W2. At the one surface A1 side, the four liquid application devices 102 are aligned in a width direction of the web W2, and at the other surface A2 side, the four liquid application devices 102 are also aligned in the width direction of the web W2. Accordingly, in the width direction of the web W2, the liquid L can be uniformly applied. In addition, the width direction of the web W2 is a direction orthogonal to the thickness direction of the web W2 and the transport direction of the web W2.

1.3.3. Third Modified Example

Next, a fiber body forming apparatus according to the third modified example of the first embodiment will be described with reference to the drawing. FIG. 6 is a schematic view showing a fiber body forming apparatus 130 according to the third modified example of the first embodiment.

According to the fiber body forming apparatus 130, as shown in FIG. 6, the positions of the liquid application devices 102 are different from those of the fiber body forming apparatus 100.

In the fiber body forming apparatus 130, for example, first, one of the liquid application devices 102 applies the liquid L to the one surface A1 of the web W2, and subsequently, the other liquid application device 102 applies the liquid L to the other surface A2 of the web W2. The two liquid application devices 102 eject the liquid L, for example, in a gravity direction. Hence, the liquid L can be more reliably applied to the web W2.

For example, when at least one of the two liquid application devices 102 ejects the liquid L in a direction opposite to the gravity direction, by the function of the gravity, the liquid L may not be applied to the web W2 in some cases.

In the example shown in the drawing, after the web W2 is transported in a first direction, and the liquid L is applied to the one surface A1 thereof, the web W2 is transported in the gravity direction by two transport rollers 132 and is further transported in a second direction opposite to the first direction, and the liquid L is then applied to the other surface A2. The first direction and the second direction are each the horizontal direction.

In addition, as shown in FIG. 7, the transport direction of the web W2 is the gravity direction, and the two liquid application devices 102 may eject the liquid L in a direction orthogonal to the gravity direction. In the case described above, the two liquid application devices 102 may simultaneously apply the liquid L to the web W2.

2. Second Embodiment

2.1. Fiber Body Forming Apparatus

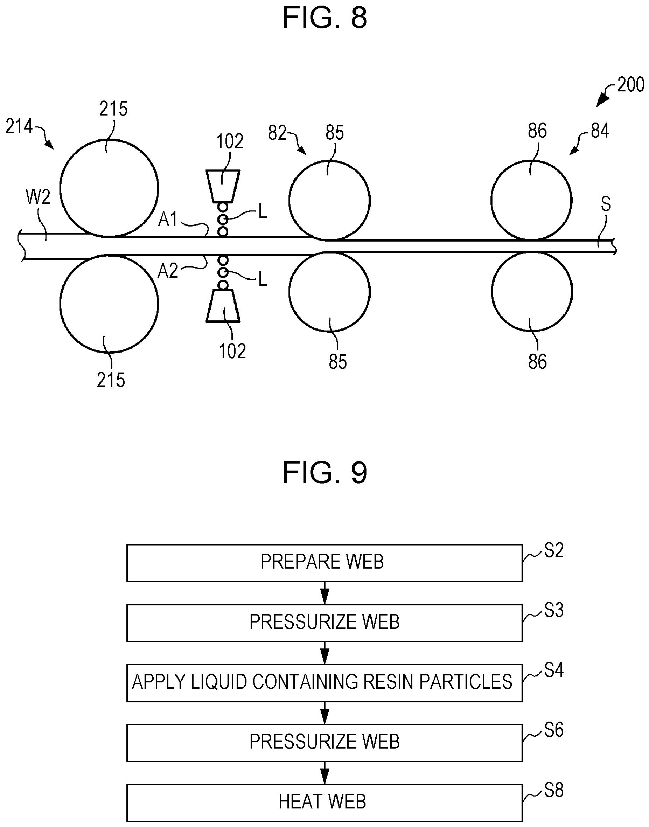

Next, a fiber body forming apparatus according to a second embodiment will be described with reference to the drawing. FIG. 8 is a schematic view showing a fiber body forming apparatus 200 according to the second embodiment.

Hereinafter, in the fiber body forming apparatus 200 according to the second embodiment, points different from those of the above fiber body forming apparatus 100 according to the first embodiment will be described, and description of points thereof similar to each other will be omitted.

As shown in FIG. 8, since a pressure application portion 214 is provided, the fiber body forming apparatus 200 is different from the fiber body forming apparatus 100 described above.

The pressure application portion 214 is formed of a pair of calendar rollers 215 and sandwiches the second web W2 at a predetermined nip pressure for pressure application. Since the web W2 is pressurized by the pressure application portion 214, the thickness thereof is decreased, and the bulk density of the web W2 is increased. One of the pair of calendar rollers 215 is a drive roller driven by a motor (not shown), and the other roller is a driven roller.

Since the pressure application portion 214 pressurizes the web W2, the bulk density of the web W2 is set, for example, to 0.09 g/cm$^3$ or more, preferably 0.09 to 0.80 g/cm$^3$, and more preferably 0.40 to 0.60 g/cm$^3$. In addition, the "bulk density" indicates a loose bulk density.

The pressure applied to the web W2 by the pressure application portion 214 is, for example, 1 to 600 kgf/cm$^2$, preferably 1 to 500 kgf/cm$^2$, and more preferably 3 to 300 kgf/cm$^3$.

The liquid application devices 102 apply the liquid L to the web W2 pressurized by the pressure application portion 214. The liquid application devices 102 are provided, for example, between the calendar rollers 215 of the pressure application portion 214 and the calendar rollers 85 of the pressure application portion 82. The diameter of the calendar roller 85 is smaller than the diameter of the calendar roller 215. Hence, the pressure application portion 82 can pressurize the web W2 by a larger force than that of the pressure application portion 214. Furthermore, as the web W2 is transported along the transport direction, since the diameters of the calendar rollers are decreased, the calendar rollers 85 and 215 are prevented from slipping on the web W2.

The fiber body forming apparatus 200 has, for example, the following features.

According to the fiber body forming apparatus 200, the liquid application devices 102 each apply the liquid L to the web W2 having a bulk density of 0.09 g/cm$^3$ or more. Hence, in the fiber body forming apparatus 200, compared to the case in which the liquid is applied to a web having a bulk density of less than 0.09 g/cm$^3$, voids of the web W2 are small, and when the liquid L is infiltrated in the web W2, a capillary phenomenon is likely to occur. Accordingly, the liquid L can be infiltrated deeply in the web W2.

According to the fiber body forming apparatus 200, the liquid application devices 102 each apply the liquid L to the web W2 having a bulk density of 0.80 g/cm$^3$ or less. Hence, according to the fiber body forming apparatus 200, the case in which since the bulk density is excessively high, the capillary phenomenon is not likely to occur can be prevented.

The fiber body forming apparatus 100 includes the pressure application portion 82 which pressurizes the web W2 to which the liquid L is applied. Hence, in the fiber body forming apparatus 100, the infiltration of the liquid L in the web W2 can be more enhanced.

For example, in the web W2 pressurized by the pressure application portion 214, a so-called spring back phenomenon in which the bulk density is slightly decreased by a spring property of the fibers may occur. Furthermore, the bulk density of the web W2 to which the liquid L is applied is slightly decreased due to swelling of the fibers. Hence, the capillary phenomenon is not likely to occur, and the infiltration of the liquid L in the web W2 may be degraded in some cases.

According to the fiber body forming apparatus 200, even if the bulk density of the web W2 is decreased because of the spring back and the swelling of the fibers, the bulk density can be recovered by the pressure application portion 82. Hence, the infiltration of the liquid L in the web W2 can be more enhanced.

2.2. Fiber Body Forming Method

Next, a fiber body forming method according to the second embodiment will be described with reference to the drawing. FIG. 9 is a flowchart illustrating the fiber body forming method according to the second embodiment. The fiber body forming method according to the second embodiment forms fibers, for example, using the fiber body forming apparatus 200.

First, by using the fiber body forming apparatus 200, the web W2 containing fibers is prepared (Step S2).

Next, by the pressure application portion 214, the web W2 is pressurized. In this step, the bulk density of the web W2 is set, for example, to 0.09 to 0.80 g/cm$^3$.

Subsequently, the liquid L containing resin particles which bind fibers is applied by the liquid application devices 102 (Step S4). In this step, the liquid L is applied to the web W2 having a bulk density of, for example, 0.09 to 0.80 g/cm$^3$.

Next, by the pressure application portion 82, the web W2 to which the liquid L is applied is pressurized (Step S6).

Subsequently, by the heating portion 84, the web W2 to which the liquid L is applied is heated (Step S8).

Besides the steps described above, the fiber body forming method according to the second embodiment may include the steps described in "1. Fiber Body Forming Apparatus". 2.3. Modified Example

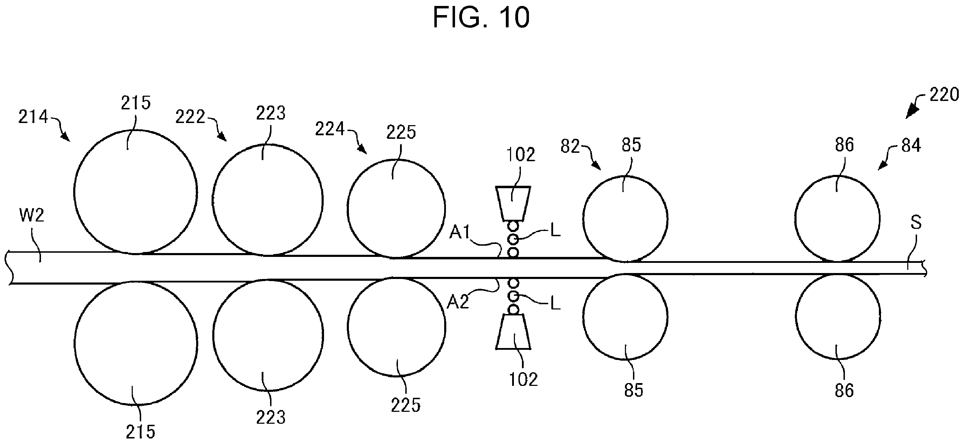

Next, a fiber body forming apparatus according to a modified example of the second embodiment will be described with reference to the drawing. FIG. 10 is a schematic view showing a fiber body forming apparatus 220 according to the modified example of the second embodiment.

Hereinafter, in the fiber body forming apparatus 220 according to the modified example of the second embodiment, points different from those of the above fiber body forming apparatus 200 according to the second embodiment will be described, and description of points thereof similar to each other will be omitted.

As shown in FIG. 10, since having pressure application portions 222 and 224 which pressurize the web W2, the fiber body forming apparatus 220 is different from the fiber body forming apparatus 200 described above.

The pressure application portion 222 pressurizes the web W2 pressurized by the pressure application portion 214. The pressure application portion 224 pressurizes the web W2 pressurized by the pressure application portion 222. The liquid application devices 102 apply the liquid L to the web W2 pressurized by the pressure application portion 224.

The pressure application portion 222 is formed of a pair of calendar rollers 223 and sandwiches the web W2 at a predetermined nip pressure for pressure application. Since the web W2 is pressurized by the pressure application portion 222, the thickness thereof is decreased, and the bulk density of the web W2 is increased. One of the pair of calendar rollers 223 is a drive roller driven by a motor (not shown), and the other roller is a driven roller.

The pressure application portion 224 is formed of a pair of calendar rollers 225 and sandwiches the web W2 at a predetermined nip pressure for pressure application. Since the web W2 is pressurized by the pressure application portion 224, the thickness thereof is decreased, and the bulk density of the web W2 is increased. One of the pair of calendar rollers 225 is a drive roller driven by a motor (not shown), and the other roller is a driven roller.

The diameter of the calendar roller 223 is smaller than the diameter of the calendar roller 215. Hence, the pressure application portion 222 can pressurize the web W2 by a large force as compared to that of the pressure application portion 214. The diameter of the calendar roller 225 is smaller than the diameter of the calendar roller 223. Hence, the pressure application portion 224 can pressurize the web W2 by a large force as compared to that of the pressure application portion 222. Furthermore, since the diameters of the calendar rollers are decreased toward a transport direction of the web W2, the calendar rollers 215, 223, and 225 are prevented from slipping on the web W2.

In addition, in the example shown in the drawing, although the fiber body forming apparatus 220 has the four pressure application portions 82, 214, 222, and 224, the number thereof is not particularly limited. For example, the fiber body forming apparatus 220 may have no pressure application portion 224 or may have at least five pressure application portions.

3. Examples and Comparative Examples

Hereinafter, with reference to Examples and Comparative Examples, the present disclosure will be described in more detail. In addition, the present disclosure is not limited to the following Examples and Comparative Examples.

By the use of a fiber body forming apparatus corresponding to the fiber body forming apparatus 100 shown in FIGs. 1 and 2, a sheet was formed. As a liquid application device, an ink jet head was used, and liquids L1 to L5 were each applied to two surfaces of a web. The application amount of each of the liquids L1 to L5 was set to 8 $g/m^2$ on one surface of the web and 16 $g/m^2$ as the total application amount on the two surfaces of the web. The temperature of a heating portion was set to 150°C. As a raw material, recycled paper "G80" (manufactured by Mitsubishi Chemical Corporation) was used.

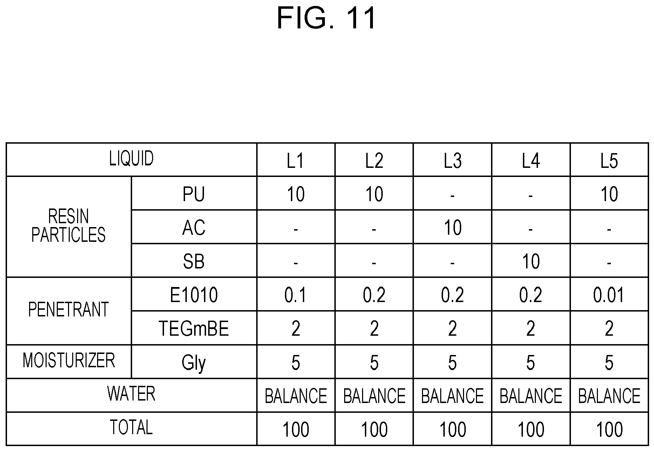

FIG. 11 is a table showing the compositions of the liquids L1 to L5. The unit of the numerical value in the table indicates percent by mass. With the balance being water, the total was set to 100 percent by mass. In the table, "PU" represents a polyurethane and was formed by the following method.

In a reaction chamber equipped with a stirring machine, a reflux condenser, and a thermometer, 1,500 g of a polycarbonate diol having a molecular weight of 3,000, 320 g of 2,2-dimethylol propionic acid (DMPA), and 1,347 g of 2-pyrrolidone having a boiling point (bp) of 245°C were charged under a nitrogen stream, and heating was performed at 60°C to dissolve DMPA. Subsequently, after 1,245 g of 4,4'-dicyclohexylmethane diisocyanate and 2.6 g of "urethane forming catalyst XK-614" manufactured by Kusumoto Chemicals, Ltd. were added and then heated to 90°C, a urethane formation reaction was performed for 5 hours, so that a urethane prepolymer was obtained.

Next, after a reaction mixture was cooled to 80°C, and 220 g of triethanolamine was then added to and mixed with the reaction mixture to form another mixture, 4,340 g was extracted from the mixture thus formed and was added in a mixed solution of 5,400 g of water and 22g of triethanolamine with vigorous stirring. Subsequently, after 1,500 g of ice was charged, and 42 g of a 2-methyl-1,5-pentanediamine aqueous solution at a concentration of 35% was added to perform a chain extension reaction, the solvent was distilled off to have a solid component concentration of 30%, so that an aqueous dispersion of urethane resin particles was obtained. In addition, by performing a reaction adjustment, aqueous dispersions of polyurethane resin particles having different average particle diameters were obtained.

By the method described above, a polyurethane was formed.

In addition, in the table shown in FIG. 11, "AC" represents a styrene-acrylic acid copolymer, and "Joncryl 61" manufactured by BASF was used. "SB" represents a styrene-butadiene copolymer, and "2507H" manufactured by Zeon Corporation was used. "E1010" represents Olefin E1010 manufactured by Nisshin Chemical Industry Co., Ltd. "TEGmBE" represents triethylene glycol monobutyl ether, and "Gly" represents glycerin.

The surface tensions of the liquids L1 to L5, each of which was controlled at 20°C, were measured using a surface tension meter "DY-500" manufactured by Kyowa Interface Science Co., Ltd.

In addition, the average particle diameter of the resin particles contained in each of the liquids L1 to L5 was measured using a particle size distribution meter "Microtrac UPA-150" manufactured by Nikkiso Co., Ltd.

In addition, before the liquids L1 to L5 were applied, the pressure was applied to the web. The pressure was changed, so that the bulk density of the web before each of the liquids L1 to L5 was applied was changed. In addition, the bulk density of the web was obtained by the following formula based on a method described in "JIS P 8118".

$$\text{Bulk Density (g/cm}^3) = \text{basis weight (g/cm}^2)/\text{thickness (nm)} \times 1{,}000$$

A continuous printing property and a liquid stability of the evaluation samples as described above were evaluated.

For the continuous printing property, continuous printing was performed on 40 samples thus formed by an ink jet printer "PXS160T" manufactured by Seiko Epson Corporation, and dot missing was evaluated. The evaluation criteria are as follows.

    A: No dot missing occurred on 30 samples or more.
    B: Dot missing occurred on 20 to less than 30 samples.
    C: Dot missing occurred on 10 to less than 20 samples.
    D: Dot missing occurred on less than 10 samples.

As the liquid stability, the viscosities of the liquid were measured before and after 50 g of each of the liquids L1 to L5 was air tightly filled in a glass bottle and was then stored at 60°C for 1 week, and the rate of change in viscosity was obtained from the viscosities before and after the storage. The viscosity was measured using a vibration type viscometer "VM100A" manufactured by Sekonic Corporation. The evaluation criteria are as follows.

A: The rate of change in viscosity was less than 10%.
B: The rate of change in viscosity was 10% to less than 20%.
C: The rate of change in viscosity was 20% or more.

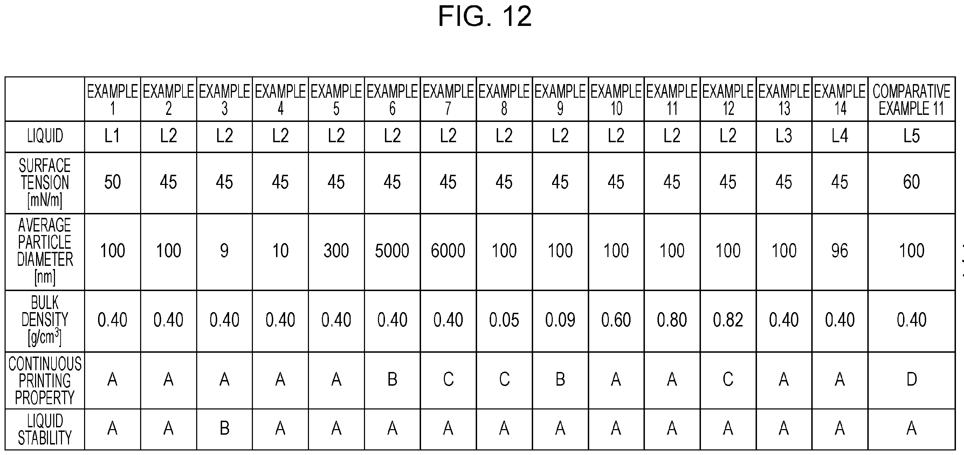

FIG. 12 is a table showing the evaluation results of the continuous printing property and the liquid stability of each of Examples 1 to 14 and Comparative Example 1.

As shown in FIG. 12, compared to Comparative Example 1, the continuous printing property is superior in Examples 1 to 14. The reason for this is believed that since the surface tensions of the liquids L1 to L4, which are used in Examples 1 to 14, are each 50 mN/m or less and are lower than that of the liquid L5 which is used in Comparative Example 1, the liquids L1 to L4 are each infiltrated deeply in the web, the paper powder is not likely to be generated, and when printing is performed by the ink jet printer, the probability in which the paper powder clogs a nozzle hole of the ink jet printer can be reduced.

In addition, in Examples 1 to 6, compared to Example 7, the continuous printing property is superior. The reason for this is believed that in Examples 1 to 6, since the average particle diameter of the resin particles is 5 $\mu$m or less and is smaller than that of Example 7, the surface area per unit mass of the resin particles is large, and as a result, a contact area between the fibers and the resin particles is large. In addition, by comparison between Example 3 and the other Examples, it is found that when the average particle diameter of the resin particles is set to 10 nm or more, the liquid stability can be improved.

In addition, in Examples 9 to 11, compared to Example 8, the continuous printing property is superior. The reason for this is believed that in Examples 9 to 11, since the bulk density is 0.09 g/cm$^3$ or more, the capillary phenomenon is likely to occur as compared to that in Example 8, and as a result, the liquid L2 is infiltrated deeply in the web. In addition, the reason the continuous printing property is inferior in Example 12 to that of Example 11 is believed that since the bulk density is excessively high, the capillary phenomenon is not likely to occur as compared to that in Example 11, and the liquid L2 is not likely to be infiltrated deeply in the web.

In the present disclosure, within the range in which the features and the advantages of the present disclosure are obtained, the structure may be partially omitted, or the embodiments and the modified examples may be arbitrarily used in combination.

The present disclosure is not limited to the embodiments described above and may be variously changed or modified. For example, the present disclosure includes substantially the same structure as the structure described in the embodiment. The substantially the same structure includes, for example, the structure in which the function, the method, and the result are the same as those described above, or the structure in which the object and the effect are the same as those described above. In addition, the present disclosure includes the structure in which a nonessential portion of the structure described in the embodiment is replaced with something else. In addition, the present disclosure includes the structure which performs the same operational effect as that of the structure described in the embodiment or the structure which is able to achieve the same object as that of the structure described in the embodiment. In addition, the present disclosure includes the structure in which a known technique is added to the structure described in the embodiment.

**Claims**

1. A fiber body forming method comprising:

   applying a liquid to a web containing fibers, the liquid containing resin particles which bind the fibers,
   wherein the liquid has a surface tension of 50 mN/m or less at 20°C.

2. The fiber body forming method according to claim 1,
   wherein the resin particles have an average particle diameter of 10 nm to 5 $\mu$m.

3. The fiber body forming method according to claim 1,
   wherein the resin particles are a thermoplastic resin or a thermosetting resin.

4. The fiber body forming method according to claim 1,
   wherein the liquid contains a penetrant.

5. The fiber body forming method according to claim 1,
   wherein the liquid contains a moisturizer.

6. The fiber body forming method according to claim 1,
   wherein in the applying a liquid, the web has a bulk density of 0.09 g/cm$^3$ or more.

7. The fiber body forming method according to claim 6,
   wherein in the applying a liquid, the web has a bulk density of 0.80 g/cm$^3$ or less.

8. The fiber body forming method according to claim 1,
   further comprising: pressurizing the web to which the liquid is applied.

9. The fiber body forming method according to claim 1,
   further comprising: heating the web to which the liquid is applied.

10. The fiber body forming method according to claim 1,
    wherein in the applying a liquid, the liquid is applied by an ink jet method.

11. A fiber body forming apparatus comprising:

    a liquid application device which applies a liquid to a web containing fibers, the liquid containing resin particles which bind the fibers,
    wherein the liquid has a surface tension of 50 mN/m or less at 20°C.

# FIG. 1

# FIG. 2

# FIG. 3

| | |
|---|---|
| PREPARE WEB | S2 |
| APPLY LIQUID CONTAINING RESIN PARTICLES | S4 |
| PRESSURIZE WEB | S6 |
| HEAT WEB | S8 |

# FIG. 4

# FIG. 5

# FIG. 6

# FIG. 7

# FIG. 8

# FIG. 9

| | |
|---|---|
| PREPARE WEB | S2 |
| PRESSURIZE WEB | S3 |
| APPLY LIQUID CONTAINING RESIN PARTICLES | S4 |
| PRESSURIZE WEB | S6 |
| HEAT WEB | S8 |

# FIG. 10

EP 3 660 213 A1

# FIG. 11

| LIQUID | | L1 | L2 | L3 | L4 | L5 |
|---|---|---|---|---|---|---|
| RESIN PARTICLES | PU | 10 | 10 | - | - | 10 |
| | AC | - | - | 10 | - | - |
| | SB | - | - | - | 10 | - |
| PENETRANT | E1010 | 0.1 | 0.2 | 0.2 | 0.2 | 0.01 |
| | TEGmBE | 2 | 2 | 2 | 2 | 2 |
| MOISTURIZER | Gly | 5 | 5 | 5 | 5 | 5 |
| WATER | | BALANCE | BALANCE | BALANCE | BALANCE | BALANCE |
| TOTAL | | 100 | 100 | 100 | 100 | 100 |

# FIG. 12

| | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | EXAMPLE 11 | EXAMPLE 12 | EXAMPLE 13 | EXAMPLE 14 | COMPARATIVE EXAMPLE 11 |
|---|---|---|---|---|---|---|---|---|---|---|---|---|---|---|---|
| LIQUID | L1 | L2 | L2 | L2 | L2 | L2 | L2 | L2 | L2 | L2 | L2 | L2 | L3 | L4 | L5 |
| SURFACE TENSION [mN/m] | 50 | 45 | 45 | 45 | 45 | 45 | 45 | 45 | 45 | 45 | 45 | 45 | 45 | 45 | 60 |
| AVERAGE PARTICLE DIAMETER [nm] | 100 | 100 | 9 | 10 | 300 | 5000 | 6000 | 100 | 100 | 100 | 100 | 100 | 100 | 96 | 100 |
| BULK DENSITY [g/cm$^3$] | 0.40 | 0.40 | 0.40 | 0.40 | 0.40 | 0.40 | 0.40 | 0.05 | 0.09 | 0.60 | 0.80 | 0.82 | 0.40 | 0.40 | 0.40 |
| CONTINUOUS PRINTING PROPERTY | A | A | A | A | A | B | C | C | B | A | A | C | A | A | D |
| LIQUID STABILITY | A | A | B | A | A | A | A | A | A | A | A | A | A | A | A |

Europäisches
Patentamt

European
Patent Office

Office européen
des brevets

# EUROPEAN SEARCH REPORT

Application Number

EP 19 21 1784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 200 005 A (BAUER GERALD C) 10 August 1965 (1965-08-10) * column 3, line 14 - line 36 * ----- | 1-11 | INV. D21H19/00 |
| X | EP 2 857 213 A1 (SEIKO EPSON CORP [JP]) 8 April 2015 (2015-04-08) * paragraph [0063]; claims 1,7 * ----- | 1-11 | |
| X | US 3 963 843 A (HITCHMOUGH JOHN R ET AL) 15 June 1976 (1976-06-15) * column 4, line 65 - column 5, line 28; claim 1 * ----- | 1-11 | |

TECHNICAL FIELDS
SEARCHED       (IPC)

D21H

The present search report has been drawn up for all claims

| Place of search | Date of completion of the search | Examiner |
|---|---|---|
| Munich | 4 February 2020 | Ponsaud, Philippe |

EPO FORM 1503 03.82 (P04C01)

## ANNEX TO THE EUROPEAN SEARCH REPORT
## ON EUROPEAN PATENT APPLICATION NO.

EP 19 21 1784

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2020

| Patent document cited in search report | | Publication date | Patent family member(s) | | Publication date |
|---|---|---|---|---|---|
| US 3200005 | A | 10-08-1965 | NONE | | |
| EP 2857213 | A1 | 08-04-2015 | CN | 104512140 A | 15-04-2015 |
| | | | EP | 2857213 A1 | 08-04-2015 |
| | | | EP | 3115221 A1 | 11-01-2017 |
| | | | JP | 6409354 B2 | 24-10-2018 |
| | | | JP | 2015091640 A | 14-05-2015 |
| | | | KR | 20150039556 A | 10-04-2015 |
| | | | US | 2015091974 A1 | 02-04-2015 |
| | | | US | 2016303881 A1 | 20-10-2016 |
| US 3963843 | A | 15-06-1976 | CA | 977221 A | 04-11-1975 |
| | | | US | 3963843 A | 15-06-1976 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018221157 A
- JP 2019031638 A
- JP 2018221158 A
- JP 10086247 A